# EUROPÄISCHE PATENTSCHRIFT

(11) **EP 0 484 312 B1**
(45) Veröffentlichungstag und Bekanntmachung des Hinweises auf die Patenterteilung: **01.12.1993**
(21) Anmeldenummer: 91890245.3
(22) Anmeldetag: 14.10.1991
(51) Int. Cl.: F02M 35/10

(54) **Luftansauganlage**
Intake manifold
Tubulaires d'admission

(30) Priorität: 02.11.1990 AT 2212/90
(43) Veröffentlichungstag der Anmeldung: 06.05.1992
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Petutschnig, Wolfgang, A-8020 Graz (AT); Kling, Wolfgang, A-8010 Graz (AT)
(74) Vertreter: Krause, Walter, Dr. Dipl.-Ing.

(56) Entgegenhaltungen:
- DD-A- 271 036
- DE-C- 1 061 129
- DE-U- 8 121 893

## Beschreibung

Die Erfindung bezieht sich auf eine Mehrzylinder-Brennkraftmaschine mit je Zylinder mindestens einem im Zylinderkopf angeordneten Einlaßkanal, der an ein für mehrere Zylinder gemeinsames Ansauggehäuse angeschlossen ist, wobei am scharfkantigen Eintritt der Einlaßkanäle in den Zylinderkopf je ein dem Zylinderkopf vorsetzbarer strömungsgünstig abgerundeter Bauteil als Einlaufhilfe vorgesehen ist und das Ansauggehäuse gegenüber den Zylinderkopf mittels einer umlaufenden Dichtung abgedichtet ist.

Nach den in der DD-PS 262 556 beschriebenen Ausführung dieser Art ist am scharfkantigen Eintritt der Einlaßkanäle in den Zylinderkopf je ein dem Zylinderkopf vorsetzbarer strömungsgünstig abgerundeter separater Bauteil vorgesehen, welcher eine Einlaßhilfe bildet. Jeder dieser separaten Bauteile weist mehrere Dichtungen auf, darunter je eine Dichtung zum Zylinderkopf und eine zweite Dichtung zum Ansauggehäuse, sodaß der Bauaufwand, die Anzahl der Bauteile und der Wartungsaufwand verhältnismäßig groß sind.

Der Erfindung liegt die Aufgabe zugrunde, diese Nachteile zu vermeiden, insbesondere die Anzahl der Bauteile und damit auch den Wartungsaufwand zu vermindern und dabei die Einströmverluste möglichst gering zu halten.

Erfindungsgemäß wird diese Aufgabe dadurch gelöst, daß der die Einlaufhilfe bildende strömungsgünstig abgerundete Bauteil und die umlaufenden Dichtung einstückig ausgebildet sind, wobei eine gemeinsame Halteplatte vorgesehen ist, die mit ihrem Umfangsbereich die umlaufende Dichtung und im übrigen die Einlaufhilfe bildet, indem sie mit den Eilaßkanälen des Zylinderkopfs korrespondierende Öffnungen aufweist, und aus je einem an den scharfkantigen Eintritt der Einlaßkanäle mit einer scharfen Kante anschließbaren ringförmigen, stark gewölbten Wulst besteht, der einen Einlaufquerschnitt besitzt, der erheblich größer ist als der Einlaßquerschnitt des Einlaßkanals des Zylinderkopfes. Dieser einzige Bauteil wird bei Anschluß der Einlaßkanäle an ein gemeinsames Ansauggehäuse zwischen Ansauggehäuse und Zylinderkopf zwischengeschaltet, wobei er die Funktion der Einlaufhilfe und die Dichtfunktion übernimmt. Der erfindungsgemäße kombinierte Bauteil weist einen geringen Raumbedarf auf und es wird sowohl der Bau- als auch der Wartungsaufwand erheblich reduziert. Der Bauteil erstreckt sich vorzugsweise so wie das Ansauggehäuse über die ganze Zylinderreihe.

In weiterer Ausgestaltung der Erfindung kann der aus der Einlaufhilfe und der Dichtung des Ansauggehäuses bestehende Bauteil aus einem Verbundteil bestehen, der aus mindestens zwei verschiedenen Werkstoffen gebildet ist, die unlösbar miteinander verbunden sind, wobei der Dichtungsteil aus weichem, elastischen, die Einlaufhilfe dagegen aus formsteifem Material besteht. Hierbei können die Einlaufhilfe als auch die Dichtung des Ansauggehäuses optimal gestaltet werden, weil der sonst notwendige Kompromiß bzgl. des Materials entfällt.

Die Erfindung wird anhand der Zeichnungen näher erläutert. Es zeigen:

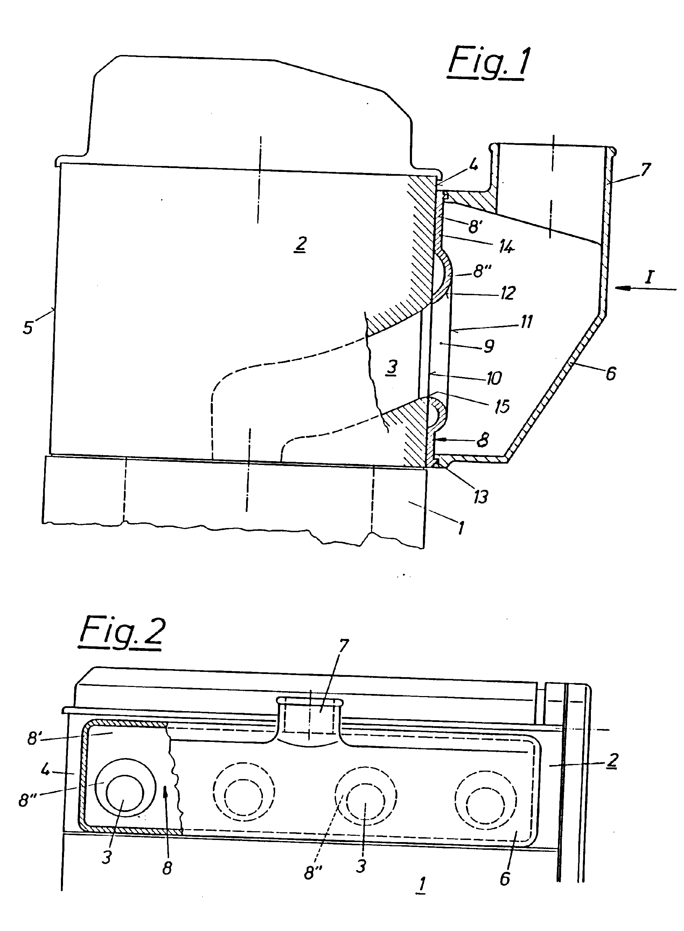

- Fig. 1: ein Ausführungsbeispiel gemäß der Erfindung, teilweise geschnitten und
- Fig. 2: dazu eine Ansicht in Richtung des Pfeiles I in Fig. 1 in verkleinertem Maßstab.

In der Darstellung des Ausführungsbeispieles gemäß der Erfindung ist das Zylindergehäuse mit 1, und der Zylinderkopf mit 2 bezeichnet. Im Zylinderkopf 2 befinden sich die zu den Einlaßventilen führenden Einlaßkanäle 3, die von der in der Zeichnung rechten Zylinderlängsseitenfläche 4 ausgehen. Die nicht dargestellten Auslaßkanäle münden in der in der Zeichnung linken Längsseitenfläche 5 des Zylinderkopfes 2.

Die Einlaßkanäle 3 werden über ein Ansauggehäuse 6, welches einen Zulaufstutzen 7 aufweist, gemeinsam gespeist. Zwischen dem Ansauggehäuse 6 und der Längsseitenfläche 4 des Zylinderkopfes 2 ist ein separater Bauteil 8 angeordnet, der sich über die gesamte Längsseitenfläche 4 des Zylinderkopfes 2 erstreckt und je Einlaßkanal 3 eine Einlaufhilfe 8'' bildet. Dieser separate Bauteil 8 weist mit den Einlaßkanälen 3 korrespondierende Öffnungen 9 auf, die mit einer scharfen Kante 15 an den ebenfalls scharfkantigen Einlaßquerschnitt 10 der Einlaßkanäle 3 anschließen. Vom Einlaufquerschnitt 10 der Einlaßkanäle 3 bis zum Einlaufquerschnitt 11, welcher erheblich größer ist als der Einlaufquerschnitt 10, befindet sich ein strömungsgünstig stark abgerundeter Wulst, welcher die Einlaufhilfe 8'' bildet und die Einlaufverluste gegenüber einem scharfkantigen Eintritt optimal herabsetzt.

Der die Einlaufhilfe 8'' bildende Bauteil und die umlaufende Dichtung 13 des Ansauggehäuses 6 sind einstückig als ein separater Bauteil ausgeführt, welcher beide Funktionen übernimmt und zusammen mit dem Ansauggehäuse 6 an der ansaugseitigen Längsseitenfläche 4 des Zylinderkopfes 2 befestigt wird. Der die Dichtung bildende Teil des Bauteiles 8 ist mit 8' und der die Einlaufhilfe bildende Teil mit 8'' bezeichnet. Der separate Bauteil 8 erstreckt sich einstückig über die ganze Zylinderreihe. Er kann als Verbundteil aus verschiedenen Materialien ausgeführt sein, wobei vorzugsweise der Dichtungsteil 8' aus weichem, elastischem und der Einlaufhilfeteil 8'' aus formsteifem Material besteht.

## Patentansprüche

1. Mehrzylinder-Brennkraftmaschine mit je Zylinder mindestens einem im Zylinderkopf angeordneten Einlaßkanal (3), der an ein für mehrere Zylinder gemeinsames Ansauggehäuse angeschlossen ist, wobei am scharfkantigen Eintritt der Einlaßkanäle in den Zylinderkopf (2) je ein dem Zylinderkopf vorsetzbarer strömungsgünstig abgerundeter Bauteil als Einlaufhilfe (8'') vorgesehen ist und das Ansauggehäuse (6) gegenüber dem Zylinderkopf mittels einer umlaufenden Dichtung (13) abgedichtet ist, **dadurch gekennzeichnet**, daß der die Einlaufhilfe (8'') bildende strömungsgünstig abgerundete Bauteil und die umlaufenden Dichtung (13) einstückig ausgebildet sind, wobei eine gemeinsame Halteplatte (14) vorgesehen ist, die mit ihrem Umfangsbereich die umlaufende Dichtung (13) und im übrigen die Einlaufhilfe (8'') bildet, indem sie mit den EinlaßKanälen (3) des Zylinderkopfs (2) korrespondierende Öffnungen (9) aufweist, und aus je einem an den scharfkantigen Eintritt (10) der Einlaßkanäle (3) mit einer scharfen Kante (15) anschließbaren ringförmigen, stark gewölbten Wulst besteht, der einen Einlaufquerschnitt (11) besitzt, der erheblich größer ist als der Einlaßquerschnitt (10) des Einlaßkanals (3) des Zylinderkopfes (2).

2. Brennkraftmaschine nach Anspruch 1, **dadurch gekennzeichnet**, daß der aus der Einlaufhilfe (8'') und der Dichtung (13) des Ansauggehäuses (6) bestehende Bauteil aus einem Verbundteil besteht, der aus mindestens zwei verschiedenen Werkstoffen gebildet ist, die unlösbar miteinander verbunden sind, wobei der Dichtungsteil (8') aus weichem; elastischen, die Einlaufhilfe (8'') dagegen aus formsteifem Material besteht.

## Claims

1. Multi-cylinder internal combustion engine with at least one inlet port (3) arranged in the cylinder head for each cylinder, the port being connected to an induction manifold common to a number of cylinders, there being provided at the sharp-edged entry of the inlet port into the cylinder head (2) a respective flow-favouring rounded-off component placeable adjacent the cylinder head as an aid to entry (8'') and the induction manifold (6) being sealed with respect to the cylinder head by means of a surrounding gasket (13), characterised in that the flow-favouring rounded-off component forming the aid to entry (8'') and the surrounding gasket (13) are formed as one component, there being provided a common retaining plate (14) which forms with its peripheral region the surrounding gasket (13) and in addition forms the aid to entry (8''), in that it has openings (9) corresponding to the inlet ports (3) in the cylinder head (2) and comprises a respective ring-shaped strongly bulged bead capable of engaging the sharp-edged entry (10) of the inlet ports (3) with a sharp edge (15), and which has an entry cross-section (11) which is substantially larger than the inlet cross-section (10) of the inlet port (3) of the cylinder head (2).

2. Internal combustion engine according to claim 1, characterised in that the component comprising the aid to entry (8'') and the gasket (13) for the induction manifold (6) comprises a composite component made up of at least two different materials which are permanently connected together, the gasket part (8') comprising a soft elastic material whereas the aid to entry (8'') is made of material of rigid form.

## Revendications

1. Moteur à combustion interne à plusieurs cylindres comprenant pour chaque cylindre au moins un canal d'entrée disposé dans la tête de cylindre, qui est raccordé à un boîtier d'admission commun à plusieurs cylindres, dans lequel on prévoit à l'entrée à bords vifs des canaux d'entrée dans la tête de cylindre une pièce constitutive arrondie pouvant être placée avant la tête de chaque cylindre et favorisant l'écoulement comme aide à l'admission et le boîtier d'admission est rendu hermétique vis-à-vis de la tête de cylindre à l'aide d'un joint périphérique, moteur caractérisé en ce que la pièce constitutive arrondie favorisant l'écoulement et formant l'auxiliaire d'admission (8'') et le joint périphérique (13) forment une seule pièce, et il a été prévu une pièce de maintien (14) commune, qui forme par son domaine périphérique le joint périphérique (13) et par ailleurs l'auxiliaire d'admission (8''), tandis qu'il comporte avec les canaux d'entrée (3) de la tête de cylindre (2) des orifices (9) correspondants et que chacune est constituée à l'entrée (10) à bord vif des canaux d'admission (3) d'un bourrelet annulaire fortement bombé raccordable à un bord vif (15), bourrelet qui possède une section d'admission (11) qui est beaucoup plus grande que la section d'entrée (10) du canal d'admission (3) de la tête de cylindre (2).

2. Moteur à combustion interne selon la revendication 1, caractérisé en ce que la pièce constitutive comprenant l'auxiliaire d'admission (8'') et le joint (13) du boîtier d'admission (6) est constituée d'une pièce composite qui est formée d'au moins deux matériaux différents, qui sont reliés de manière indémontable, la pièce de joint (8') étant constituée d'un matériau souple élastique, tandis que l'auxiliaire d'admission (8'') est en matériau rigide.
